(19) Europäisches Patentamt
European Patent Office
Office européen des brevets

(11) **EP 1 886 326 B1**

(12) **FASCICULE DE BREVET EUROPEEN**

(45) Date de publication et mention
de la délivrance du brevet:
**05.10.2011 Bulletin 2011/40**

(21) Numéro de dépôt: **06764664.6**

(22) Date de dépôt: **19.05.2006**

(51) Int Cl.:
*H01F 41/02* (2006.01)   *H01F 1/147* (2006.01)
*H01F 1/153* (2006.01)   *B21B 27/00* (2006.01)
*B21B 1/00* (2006.01)

(86) Numéro de dépôt international:
**PCT/FR2006/001170**

(87) Numéro de publication internationale:
**WO 2006/123072 (23.11.2006 Gazette 2006/47)**

(54) **PROCEDE DE FABRICATION D'UNE BANDE EN MATERIAU NANOCRISTALLIN ET DISPOSITIF DE FABRICATION D'UN TORE ENROULE A PARTIR DE CETTE BANDE**

VERFAHREN ZUM PRODUZIEREN EINES STREIFENS AUS NANOKRISTALLINEM MATERIAL UND EINRICHTUNG ZUM HERSTELLEN EINES GEWICKELTEN KERNS AUS DEM STREIFEN

METHOD OF PRODUCING A STRIP OF NANOCRYSTALLINE MATERIAL AND DEVICE FOR PRODUCING A WOUND CORE FROM SAID STRIP

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité:  **20.05.2005 EP 05291098**

(43) Date de publication de la demande:
**13.02.2008 Bulletin 2008/07**

(73) Titulaire: **Imphy Alloys**
**93200 Saint Denis (FR)**

(72) Inventeurs:
• **WAECKERLE, Thierry**
**F-58000 Nevers (FR)**
• **SAVE, Thierry**
**F-58660 Coulanges Les Nevers (FR)**
• **DEMIER, Alain**
**F-58640 Varennes Vauzelles (FR)**

(74) Mandataire: **Plaisant, Sophie Marie et al**
**ARCELOR France**
**Arcelor Research Intellectual Property**
**5 Rue Luigi Cherubini**
**93212 La Plaine Saint-Denis Cedex (FR)**

(56) Documents cités:
**EP-A- 0 271 657       EP-A- 0 687 134**
**WO-A-03/088281       FR-A- 2 823 507**
**US-A- 2 642 764       US-A- 5 969 930**
**US-B1- 6 563 411**

• **PATENT ABSTRACTS OF JAPAN vol. 013, no. 564 (E-860), 14 décembre 1989 (1989-12-14) & JP 01 235213 A (HITACHI METALS LTD), 20 septembre 1989 (1989-09-20)**

**Description**

La présente invention concerne un procédé de fabrication d'une bande en matériau nanocristallin, un dispositif de fabrication d'un tore enroulé à partir de cette bande, ainsi que les tores en question et les composants qui les intègrent.

La fabrication de tores en matériau nanocristallin à faible perméabilité ($\mu \leq 1000$) à partir de rubans amorphes de type FeCuNbSiB que l'on transforme par un recuit est en particulier divulguée dans le brevet FR 2 823 507.

Ce document décrit notamment un procédé de recuit sous contrainte de ces rubans amorphes, qui réduit significativement l'extrême fragilité des nanocristallins qui ne pouvaient précédemment pas être manipulés après nanocristallisation en tore. Ce procédé de recuit sous contrainte permet d'obtenir des propriétés mécaniques telles qu'on peut réaliser l'enroulement de la bande sans risque de rupture, et qu'on puisse également la dérouler et la ré-enrouler en conservant toujours les mêmes mandrins d'enroulage.

Ces propriétés mécaniques améliorées sont dues à l'obtention d'une section de bande nanocristallisée en forme de $\Omega$, présentant au minimum des points d'inflexion, avec une flèche supérieure à 1% de la largeur. Cette conformation correspond à un état moins fragile qu'un nanocristallin classique permettant en particulier de dérouler puis ré enrouler le ruban cristallisé sur le même mandrin, mais cet état à profil marqué en $\Omega$ reste encore trop fragile pour être manipulé et déroulé/rembobiné sur des mandrins de diamètre inférieur et en particulier jusqu'à obtenir des tores de diamètre inférieur ou égal à 10 mm.

De plus, du fait du profil en $\Omega$, les performances magnétiques et le pourcentage de casse au ré-enroulage ne sont pas indépendants de la face de la bande qui est tournée vers l'extérieur du tore. Lorsque la bosse du $\Omega$ est orientée vers l'extérieur du tore, les performances sont meilleures et le taux de casse au ré-enroulage est faible ; inversement pour la bosse $\Omega$ orientée vers l'intérieur du tore. Ainsi, en production, soit il faut permettre au ruban d'être systématiquement avec bosse du $\Omega$ à l'extérieur des tores produits, ce qui exige un contrôle supplémentaire, et un procédé plus complexe à mettre en oeuvre, soit le rendement de production sera dégradé et les performances hétérogènes.

En outre, lors de l'enroulage automatisé en tore, la tête de ruban peut très difficilement être aspirée et plaquée sur le mandrin d'enroulage puisque le profil en $\Omega$ empêche une bonne aspiration et adhérence de la tête de ruban par ce phénomène de dépression.

Par ailleurs, on constate que plus la perméabilité de la bande augmente, plus elle est fragile dans son état final et son taux de casse devient important Ce procédé ne permet donc pas de produire de façon industrielle une bande nanocristalline, en particulier lorsque sa perméabilité dépasse 1000.

Enfin, la fragilité réduite mais encore importante de la bande obtenue selon l'art antérieur permet d'atteindre une vitesse de défilement qui ne dépasse pas 3 cm/s.

Or, on considère qu'un procédé de recuit de nanocristallisation est industriel s'il permet d'atteindre un taux de casse du ruban amorphe inférieur à 10 casses par km, avec une vitesse de défilement supérieure ou égale à 10 cm par seconde et par mètre de zone utile de four (zone dont la température est supérieure ou égale à 500°C), et une plage de réglage de la température de recuit supérieure à 10°C (plage dans laquelle on peut faire varier la température de recuit sans changer significativement les performances de la bande, en particulier sa fragilité) .

Le but de la présente invention est donc de proposer un procédé de fabrication de bandes nanocristallines apte à être mis en oeuvre à une échelle industrielle, ainsi qu'un produit nanocristallin pouvant être manipulé et utilisé pour des géométries de circuits magnétiques plus compactes que celles de l'art antérieur, avec, en particulier, un rayon d'enroulage beaucoup plus faible que celui connu jusqu'ici.

A cet effet, l'invention a pour premier objet un procédé de fabrication d'une bande en matériau nanocristallin obtenue à partir d'un ruban coulé dans un état amorphe, de composition atomique :

$$[Fe_{1-a-b}Co_aNi_b]_{100x-y-z-\alpha-\beta-\gamma}Cu_xSi_yB_zNb_\alpha M'_\beta M''_\gamma$$

M'étant l'un au moins des éléments V, Cr, Al et Zn,
M" étant l'un au moins des éléments C, Ge, P, Ga, Sb, In et Be, avec :

$$a \leq 0{,}07 \text{ et} \qquad b \leq 0{,}1$$
$$0{,}5 \leq x \leq 1{,}5 \quad \text{et} \quad 2 \leq \alpha \leq 5$$
$$10 \leq y \leq 16{,}9 \quad \text{et} \quad 5 \leq z \leq 8$$
$$\beta \leq 2 \qquad \text{et} \qquad \gamma \leq 2$$

et en soumettant le ruban amorphe à un recuit de cristallisation, dans lequel on soumet le ruban au recuit à l'état déroulé, en défilement au travers d'au moins deux blocs en S et sous tension dans une direction sensiblement longitudinale axiale du ruban, de telle sorte que le ruban soit maintenu à une température de recuit comprise entre 530°C et 700°C, pendant une durée comprise entre 5 et 120 secondes, sous une contrainte de traction axiale comprise entre 2 et 1000 MPa, la contrainte de traction subie par ledit ruban amorphe, sa vitesse de défilement lors dudit recuit, le temps et la température de recuit étant choisis de telle sorte que le profil de section de la bande ne soit pas en forme de $\Omega$, et présente une flèche maximale de la section transversale de la bande inférieure à 3% de la largeur de la bande, et de préférence inférieure à 1% de la largeur.

Les présents inventeurs ont constaté, de façon tout à fait surprenante qu'il était possible de réduire de façon considérable la fragilité des bandes nanocristallines en leur conférant une section plane, ne présentant pas de profil en $\Omega$. Cette réduction de fragilité permet de diminuer considérablement le taux de casse au km et d'augmenter la vitesse de défilement de la bande.

Sans vouloir être lié par une théorie, les présents inventeurs ont en effet découvert que, à vitesse de défilement donnée et contrainte de traction donnée, plus la température ou le temps de recuit sous contrainte croit, plus la fraction cristallisée $f_x$ augmente jusqu'à atteindre une fraction cristallisée critique $f_x^c$, dépendant du niveau de contrainte. Si $f_x$ devient supérieur à cette fraction critique $f_x^c$, alors le profil en $\Omega$ commence à apparaître et le matériau devient nettement plus fragile.

Par ce nouveau procédé impliquant un réglage adapté des conditions de recuit (contrainte de traction, vitesse de défilement, temps et température de recuit), il est possible de stabiliser la production à une fraction cristallisée inférieure à la fraction recristallisée critique, de façon à éviter un profil de section de bande en $\Omega$. On obtient ainsi une bande apte à être prise facilement en début d'enroulage, à être bobinée sur de grands diamètres sans faux ronds, et à être enroulée efficacement et indistinctement avec l'une ou l'autre de ses faces tournée vers l'extérieur du tore.

Le procédé selon l'invention peut en outre présenter les caractéristiques suivantes, prises seules ou en combinaison :

- la vitesse de défilement de la bande est supérieure ou égale à 10 cm par seconde et par mètre de zone utile de four,
- la contrainte de traction axiale est supérieure à 500 MPa,
- le taux de casse du ruban amorphe en défilement est inférieur à 10 casses par kilomètre de ruban,
- y est supérieur ou égal à 12.

Dans un mode de réalisation préféré, la composition du ruban amorphe est choisie de telle sorte que :

$$a \leq 0,04 \qquad et \qquad b \leq 0,07$$
$$0,5 \leq x \leq 1,5 \qquad et \qquad 2 \leq \alpha \leq 5$$
$$13 \leq y \leq 16,6 \qquad et \qquad 5,8 \leq z \leq 8$$
$$\beta \leq 2 \qquad et \qquad \gamma \leq 2$$

Dans un autre mode de réalisation préféré, la composition du ruban amorphe est choisie de telle sorte que :

$$a \leq 0,02 \qquad et \qquad b \leq 0,05$$
$$0,5 \leq x \leq 1,5 \qquad et \qquad 2,5 \leq \alpha \leq 4$$
$$14,5 \leq y \leq 16,5 \qquad et \qquad 5,8 \leq z \leq 7,5$$
$$\beta \leq 1 \qquad et \qquad \gamma \leq 1$$

Ces deux derniers modes de réalisation employant des gammes de composition particulières sont plus particulièrement utiles pour la fabrication de capteurs de courant aptes à mesurer un courant comportant une forte composante continue et pouvant être utilisés dans un compteur d'énergie à simple ou double étage, comprenant au moins un tore en ledit matériau nanocristallin, ainsi que pour la fabrication d'inductances de stockage ou de filtrage, indépendantes du niveau de composante continue superposée, pouvant être utilisées dans un compteur d'énergie, comprenant au moins un tore en ledit matériau nanocristallin.

Un deuxième objet de l'invention est constitué par une bande en matériau nanocristallin pouvant être obtenue par la mise en oeuvre du procédé selon l'invention, apte à subir en tout endroit de cette bande, un pliage avec un diamètre de courbure d'au plus 3mm, sans présenter de casse ni de fissure.

La bande selon l'invention peut en outre présenter les caractéristiques suivantes, prises seules ou en combinaison :

- bande obtenue par la mise en oeuvre du procédé selon l'invention à partir d'un ruban amorphe, l'épaisseur de ladite bande étant réduite d'au moins 10% par rapport à l'épaisseur dudit ruban amorphe,
- bande dont le champ coercitif est inférieur ou égal à 7A/m, et de préférence inférieur ou égal à 5A/m.
- bande dont l'induction à 2000e est supérieure ou égale à 12kG.

Un troisième objet de l'invention est constitué par un tore en matériau nanocristallin pouvant être obtenu par la mise en oeuvre du procédé selon invention à l'issue duquel on enroule ladite bande nanocristalline, et dont la perméabilité est supérieure ou égale à 50 et inférieure à 200, et dont la fréquence de coupure est comprise entre 30 et 200MHz, et par un tore dont le diamètre est inférieur ou égal à 10 mm.

Dans un mode de réalisation préféré, le tore selon l'invention présente une dégradation du foisonnement d'au plus 3% par rapport au foisonnement obtenu par enroulement d'une bande de même composition ayant subi un recuit de cristallisation sans contrainte, et ce pour une réduction d'épaisseur de la bande nanocristallisée allant jusqu'à 10% par rapport à l'épaisseur du ruban amorphe de départ.

Dans un autre mode de réalisation préféré, le tore selon l'invention est obtenu par le procédé selon l'invention, à l'issue duquel on enroule une première fois ladite bande nanocristalline sur un premier mandrin, puis par déroulage et enroulage ultérieur sur un second mandrin, le diamètre du second mandrin étant inférieur au diamètre du premier mandrin.

Un quatrième objet de l'invention est constitué par un dispositif (1) de fabrication d'un tore magnétique à partir d'un ruban (R) coulé dans un état amorphe, par recuit dudit ruban (R) amorphe, qui comporte :

- un arbre de réception (2) d'une bobine de ruban (R) à l'état amorphe,
- un four à passage (3) régulé en température,
- au moins un bloc en S (4) situé avant l'entrée du ruban (R) dans le four (3) et relié à un moteur frein (5),
- un dispositif (6) de réglage d'une contrainte de traction dans la direction axiale dudit ruban amorphe (R) et de la bande (N) en matériau nanocristallin, ledit dispositif (6) comprenant un dispositif de mesure d'effort relié à un module de commande du moteur frein (5) dudit bloc en S situé (4) avant l'entrée du ruban (R) dans le four (3),
- au moins un bloc en S (7) situé après la sortie de la bande (N) du four à passage (3) et relié à un moteur,
- au moins un mandrin d'enroulement (8) pour l'enroulement de la bande (N) obtenue après recuit sous la forme d'un tore en matériau nanocristallin,

le ruban amorphe (R) passant d'une bobine de stockage du ruban amorphe (R) engagée sur ledit arbre de réception (2), à la bobine de bande (N) en matériau nanocristallin, successivement à travers le bloc en S (4) situé avant l'entrée du ruban (R) dans le four (3), puis à travers le dispositif de mesure d'effort (6), puis à travers le four (3), puis à travers le bloc en S (7) situé après la sortie de la bande (N) du four (3).

Le dispositif selon l'invention peut en outre présenter les caractéristiques suivantes, prises seules ou en combinaison :

- le dispositif comprend un premier mandrin d'enroulement de la bande et un second mandrin d'enroulement de la bande, de sorte qu'on puisse, après enroulement d'un premier tore sur le premier mandrin, couper la bande (N) et engager une partie de tête de la bande (N) sur le second mandrin, pour réaliser l'enroulement d'un second tore, sans interrompre la fabrication,
- le dispositif comprend un seul mandrin d'enroulement (8) de la bande (N) et un accumulateur de bande (9) en aval dudit bloc en S (7) de sortie du four (3), permettant de changer de bobine d'enroulage sans interrompre la fabrication,
- le dispositif comprend en outre au moins un galet presseur (10) qui vient comprimer la bande (N) recuite lors de son passage dans le bloc en S (7) situé après la sortie de la bande (N) du four à passage (3),
- le dispositif comprend en outre au moins un galet bombé qui vient comprimer le ruban amorphe (R) lors de son passage dans le bloc en S (4) situé avant l'entrée dudit ruban (R) dans le four (3).

Ce dispositif permet d'obtenir une section plane telle qu'elle est recherchée selon l'invention. Il faut noter qu'il n'était pas possible pour l'homme du métier de prédire qu'une bande nanocristalline pourrait suivre les courbures fortes et alternées de bloc en S avec les fortes contraintes de traction superposées, et ce sans casse pendant un voire plusieurs kilomètres de ruban.

L'invention va a présent être décrite en référence aux planches de figures annexées qui représentent :

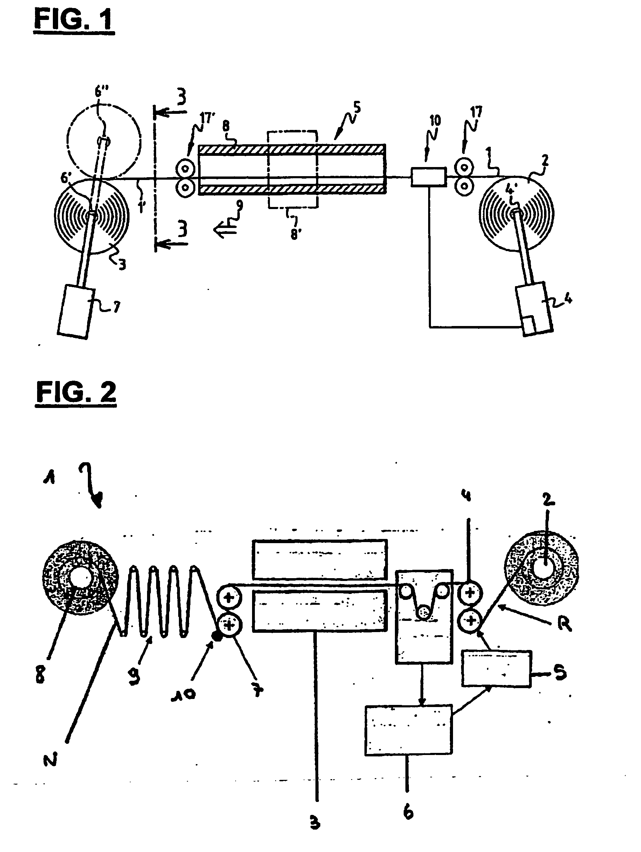

- figure 1 : dispositif du brevet FR 2 823 507,
- figure 2 : vue schématique d'un dispositif selon l'invention.

Les alliages utilisés pour la fabrication de bandes nanocristallines selon la présente invention ont la composition atomique suivante :

$$[Fe_{1-a-b}Co_aNi_b]_{100-x-y-z-\alpha-\beta-\gamma}Cu_xSi_yB_zNb_\alpha M'_\beta M''_\gamma$$

M'étant l'un au moins des éléments V, Cr, Al et Zn,

M'' étant l'un au moins des éléments C, Ge, P, Ga, Sb, In et Be, avec :

$$a \leq 0,07 \text{ et} \qquad b \leq 0,1$$
$$0,5 \leq x \leq 1,5 \qquad \text{et} \qquad 2 \leq \alpha \leq 5$$
$$10 \leq y \leq 16,9 \qquad \text{et} \qquad 5 \leq z \leq 8$$
$$\beta \leq 2 \qquad \text{et} \qquad \gamma \leq 2$$

Dans la présente demande, sauf mention contraire, tous les pourcentages se rapportant à des compositions sont des pourcentages atomiques.

L'utilisation d'un élément amorphisant tel que le bore permet d'obtenir par coulée avec un refroidissement à grande vitesse, un matériau amorphe, généralement sous la forme d'un ruban mince qui est ensuite recuit pour obtenir un matériau de type nanocristallin, c'est à dire un matériau contenant plus de 50% en volume de cristaux présentant une taille inférieure à 100 nm, dans une phase amorphe constituant le solde du volume du matériau.

Dans le cadre de la présente invention, le pourcentage atomique en bore est compris entre 5 et 8%. En effet, si la teneur en bore est trop faible, sans substitution partielle par un autre amorphisant, le ruban devient très difficile à rendre amorphe par un procédé conventionnel d'élaboration par trempe sur roue. En pratique, on ne peut avoir moins de 5% de bore, et on préfère en avoir plus de 6%.

A l'inverse, en accroissant le pourcentage en bore, la cristallisation au défilé sous contrainte est rendue difficile, ce qui oblige à diminuer la vitesse V de défilement et limite donc la plage de perméabilité accessibles ($\mu_{min} \geq 300$) et surtout dégrade très fortement le champ coercitif Hc, qui atteint des valeurs supérieures à 13 A/m. En conséquence, la teneur maximale en bore doit être limitée à 8%.

Les éléments regroupés sous la lettre M'', à savoir C, Ge, P, Ga, Sb, In et Be sont également des éléments amorphisants. La substitution partielle du bore par un ou plusieurs de ces éléments est possible pour un niveau de substitution limite, car le bore est l'amorphisant le plus efficace vis à vis des vitesses de trempe sur roue nécessaire à obtention d'un état 100% amorphe avant recuit de cristallisation sous traction. On limite donc ce taux de substitution des autres éléments amorphisants à 2%.

La teneur en cobalt de la bande selon l'invention est au maximum de 5.75at% environ (a ≤ 0,07 et b, x, y, z, α, β et γ minimum). En effet, si on dépasse cette valeur, Hc est dégradé ainsi que les pertes magnétiques, ce qui est néfaste à une miniaturisation des composants fabriqués à partir de cette bande. Compte-tenu de ces désavantages, on préfère limiter la valeur de a à 0,04, voire à 0,02 et de façon plus particulièrement préférée à 0.

La teneur en nickel de la bande selon l'invention est au maximum de 8,25 at% environ (b ≤ 0,1 et a, x, y, z, α, β et γ minimum). En effet, si on dépasse cette valeur, la saturation du matériau est dégradée bien en dessous de 1,2T, ainsi que sa capacité à réduire significativement le volume des circuits magnétiques comparé à des alternatives en amorphes base cobalt par exemple. Compte-tenu de ces désavantages, on préfère limiter la valeur de b à 0,07 voire 0,05 et de façon plus particulièrement préférée à 0.

On préfère en outre limiter le total des teneurs en cobalt et nickel à environ 8,25 at% (a+b≤0,1).

Le pourcentage atomique en cuivre de la composition selon l'invention est compris entre 0,5 et 1,5%. Le pourcentage en cuivre doit être maintenu au-dessus de 0,5%, car en deçà de cette valeur, la nucléation des nanocristaux n'est plus suffisante pour avoir des cristaux de petite taille et Hc croît démesurément. A contrario, si le pourcentage en cuivre est supérieur à 1,5%, de nombreux cristaux sont formés mais cela ne provoque pas d'amélioration visible des performances tandis que l'aimantation à saturation décroît.

Le pourcentage atomique en niobium de la composition selon l'invention est compris entre 2 et 5%. Cet élément est un inhibiteur de croissance, chargé de conserver une faible taille de cristaux lors de la croissance de ceux-ci. En dessous de 2% de niobium, l'inhibition est insuffisante et Hc croît sur tous les types de rubans nanocristallins, y compris ceux produits par nanocristallisation sous traction.

Si on accroît le pourcentage en niobium à 6% l'induction saturante B

1,592 kA/m (20 Oe) se dégrade significativement et surtout on observe une fragilisation du ruban qui le rend très difficile à manipuler industriellement sans risque de casses fréquentes. En conséquence, le pourcentage maximum en niobium doit être conservé inférieur ou égal à 5%.

Le pourcentage atomique en silicium de la composition selon l'invention est compris entre 10 et 16,9%. Ce métalloïde permet de régler la magnétostriction du ruban nanocristallisé à une valeur très proche de zéro.

Dans un mode de réalisation préféré, la teneur en silicium de la bande selon l'invention est supérieure ou égale à 12%. En effet, en dessous de cette valeur, Hc se dégrade et atteint des valeurs de l'ordre de 8 A/m, provoquant des pertes magnétiques relativement élevées, bien qu'acceptables.

Les éléments regroupés sous la lettre M', à savoir V, Cr, Al et Zn, sont des métalloïdes pouvant remplacer de silicium, dans certaines limites. En effet, une substitution dépassant 2% s'écarte significativement de ces valeurs de magnétostriction, rendant le produit final sensible aux contraintes externes telles qu'enroulage du ruban sur lui-même (contrainte de courbure de la bande) et emballage.

Par ailleurs, pour une utilisation en stockage d'énergie, en lissage d'harmonique de courant ou encore des selfs de mode commun pour hautes fréquences, une grande linéarité B-H n'est pas forcément nécessaire ou utile ou intéressante et un rapport Br/Bm (Br induction rémanente, Bm induction à 1,592 kA/m (20 Oe) dite induction d'approche à saturation) de 10-15% peut être tout à fait suffisant.

En revanche dans certains cas de composants, tels que les inductances de filtrage où on désire atténuer de la même façon quelle que soit la composante continue superposée, les inductances de stockage où on désire stocker et transférer la même énergie du et au circuit électrique quelle que soit la composante continue superposée, les capteurs de courant où on désire mesurer et/ou transformer le courant avec la même précision quelle que soit la composante continue superposée, une forte linéarité B-H est nécessaire. Ceci revient à dire pour les alliages nanocristallisés sous traction au défilé que ces applications nécessitent un rapport Br/Bm inférieur ou égal à 3% et de préférence inférieure ou égal à 1%. Les présents inventeurs ont constaté de façon surprenant que les plages de composition qui viennent d'être décrites doivent être réduites pour atteindre de telles valeurs.

Ainsi, on obtient tous les avantages de l'invention déjà présentés précédemment et aussi une linéarité B-H améliorée, telle que le rapport Br/Bm soit inférieur ou égal à 3% à 20°C, en respectant les conditions supplémentaires suivantes :

$$a \leq 0,04 \quad \text{et} \quad b \leq 0,07$$
$$0,5 \leq x \leq 1,5 \quad \text{et} \quad 2 \leq \alpha \leq 5$$
$$13 \leq y \leq 16,6 \quad \text{et} \quad 5.8 \leq z \leq 8$$
$$\beta \leq 2 \quad \text{et} \quad \gamma \leq 2$$

En outre, dans ce domaine de composition, on observe que le ratio $B_r/B_m$ entre 0 et 400°C est inférieur ou égal à 6 % et que le ratio $B_r/B_m$ entre 0 et 300°C est inférieur ou égal à 3%.

On obtient en outre une linéarité B-H optimale, telle que le rapport $B_r/B_m$ soit inférieur ou égal à 1% à 20°C et de préférence inférieur ou égal à 0.7% à 20°C, en respectant les conditions supplémentaires suivantes :

$$a \leq 0,02 \quad \text{et} \quad b \leq 0,05$$
$$0,5 \leq x \leq 1,5 \quad \text{et} \quad 2,5 \leq \alpha \leq 4$$
$$14,5 \leq y \leq 16,5 \quad \text{et} \quad 5,8 \leq z \leq 7,5$$
$$\beta \leq 1 \quad \text{et} \quad \gamma \leq 1$$

En outre, dans ce domaine de composition, on observe que le ratio $B_r/B_m$ entre 0 et 400°C est inférieur ou égal à 1,5 % et que le ratio $B_r/B_m$ entre 0 et 300°C est inférieur ou égal à 0,8%.

Le matériau est élaboré sous forme liquide puis coulé avec une forte vitesse de refroidissement, dans une installation de coulée de rubans amorphes à cylindre refroidi de type classique, de telle sorte qu'on obtienne en sortie de l'installation de coulée, une bande amorphe enroulée sous la forme d'une bobine à spires jointives.

L'installation de recuit comporte principalement un four à passage (3) qui peut être un four à résistance réalisant le chauffage de la bande par convection et rayonnement, un four à rayonnement pur ou encore une installation de chauffage de la bande par effet Joule à la traversée du four.

Le recuit de la bande pourrait également être effectué par un lit fluidisé constitué de particules solides ou liquides ou sous l'une des formes sol gel et aérosol en suspension dans un gaz porteur, le milieu de chauffage de la bande étant lui-même chauffé par contact avec un enceinte elle-même chauffée par un four de type classique, par exemple à résistance.

Le four (3) comporte une zone centrale dans laquelle la température est homogène et comprise dans l'intervalle nécessaire pour effectuer la recristallisation de la bande sous tension en défilement selon l'invention, cette température étant comprise entre 530°C et 700°C, et de préférence entre 540°C et 690°C. Dans cette plage, on fait varier la température T sensiblement selon la vitesse de production V choisie et selon la contrainte de traction σ choisie (c'est à dire aussi la perméabilité μ choisie), car augmenter V ou diminuer σ accroît la température optimale T de recuit. La limite de température supérieure de la bande de 700°C est imposée pour éviter la formation de phases constituées de borures qui fragilisent la bande et diminuent ses propriétés magnétiques.

Les mandrins d'enroulement (8) et de déroulement de la bande sont de préférence motorisés ou freinés (par exemple à l'aide d'un frein à poudre sur dérouleur) pour accroître encore la productivité du dispositif. Les blocs en S en entrée (4) et sortie (7) du four à passage (3) sont tous les deux motorisés, le bloc en S d'entrée (4) étant relié à un moteur frein (5) qui exerce un freinage et un couple de retenue sur le ruban amorphe (R) pendant tout le traitement. Le bloc en S (7) en sortie du four (3) est entraîné par un moteur, associé à un réducteur, et sert à entraîner la bande (N) afin qu'elle défile dans le four avec une contrainte de traction parfaitement régulée, ainsi qu'à une vitesse régulière pouvant dépasser 10 cm/s. La longueur du four de recuit (3) devra être adaptée à la vitesse de défilement du ruban (R), de telle sorte que la cristallisation puisse s'effectuer correctement, sachant que plus la vitesse de défilement augmente, plus la longueur du four (3) doit être augmentée.

La combinaison de ces deux blocs en S (4,7) permet d'exercer de façon parfaitement uniforme sur la largeur de bande une traction parfaitement régulée, la contrainte de traction dans la direction longitudinale axiale du ruban (R) en cours de traitement dans le four de recuit (3) étant comprise entre 2 et 1000 MPa.

Il est également possible et préférable de prévoir que les mandrins d'enroulement (8) de la bande (N) et de déroulement (2) du ruban amorphe (R) soient motorisés pour assurer une traction régulée d'amplitude faible (de l'ordre de quelques MPa) sur le ruban (R) avant passage dans le bloc en S d'entrée (4) et/ou sur la bande (N) après passage dans le bloc en S de sortie (7).

La régulation de la contrainte de traction exercée sur la bande (N) en défilement pendant le traitement de recuit est réalisée à l'aide d'un dispositif de mesure et de réglage d'effort (6).

Ce dispositif (6) peut comprendre une première poulie fixe et une seconde poulie fixe sur laquelle la bande passe successivement à l'entrée et à la sortir du dispositif de réglage d'effort. Entre ces deux poulies, le ruban (R) passe sur une poulie à axe mobile dont l'axe est parallèle à celui des axes des deux poulies fixes. La poulie de l'axe mobile est reliée par une tige de traction à un capteur d'effort fixé sur un support. Cette tige permet de mesurer en continu la traction F exercée sur le ruban (R) et le signal de mesure correspondant est transmis à un module de commande du moteur-frein (5) du bloc en S motorisé d'entrée (4) dans le four (3).

Ce moteur-frein (5) est régulé à partir du signal d'effort pour exercer sur le ruban (R) une force de retenue et de traction dans la direction longitudinale axiale égale à la force F qui constitue le paramètre de réglage. La force de traction et d'entraînement exercée par le moteur du bloc en S motorisé de sortie (7) du four (3) s'ajuste automatiquement à la valeur d'effort F imposé par le moteur frein (5).

Par ailleurs, le dispositif (1) selon l'invention peut comprendre un premier mandrin d'enroulement de la bande et un second mandrin d'enroulement de la bande, de sorte qu'on puisse, après enroulement d'un premier tore sur le premier mandrin, couper la bande (N) et engager un partie de tête de la bande (N) sur le second mandrin, pour réaliser l'enroulement d'un second tore, sans interrompre la fabrication. Ce changement de bobines de produits finis est en particulier favorisé par le découplage total de la zone de forte traction comprise entre les deux blocs en S (4,7), des zones de faible traction avant et après ces blocs (4,7), découplage qui permet de lisser les éventuelles fluctuations brutales de contrainte. On entend ici par le mot "tore" aussi bien un tore enroulé définitivement suivant les prescriptions de dimensionnement d'un composant magnétique, qu'une bobine, demi-produit destiné ultérieurement à être mis dans une enrouleuse manuelle ou automatique de tore (comprenant les opérations de déroulage, mesure de longueur de la bande, enroulage du tore, coupe à longueur, collage de la spire externe et extraction depuis le mandrin).

On peut également ajouter au moins un galet presseur (10) sur la sortie de bloc en S (7) qui vient comprimer la bande (N) recuite lors de son passage dans le bloc en S (7) situé après la sortie de la bande (N) du four à passage (3). Ce galet supplémentaire (10) de bloc en S peut être bombé. Il est préférable et avantageux de disposer de galets bombés dans les blocs en S (4,7), car ainsi non seulement ils viennent comprimer le ruban amorphe (R) ou la bande nanocristalline (N) lors de son passage dans le bloc en S (4,7), mais ils permettent en outre de centrer automatiquement le ruban (R) ou la bande (N) permettant un défilement qui ne dévie pas de sa trajectoire, et peut subir une contrainte de traction régulière uniformément distribuée sur sa largeur et sur l'ensemble de la surface de contact des galets de bloc en S (4,7).

On peut accroître encore l'adhérence de la bande, sa stabilité et son centrage suivant l'axe transverse des rouleaux, en insérant d'autres blocs en S en ligne sur le procédé. Cela peut permettre en outre de réguler le rapport de contraintes entre la zone de traction élevée (entre blocs en S) et les zones aval et amont à traction réduite, ainsi que la répartition des contraintes localisées et donc réduire encore au final le taux de casse au km.

Le procédé selon l'invention peut également permettre de réaliser des tores enroulés à grande vitesse de forme ronde ou oblongue en différé sur un poste d'enroulage déconnecté du poste de production de recuit sous traction. Dans ce cas l'enroulage est réalisé à partir de bobines de bandes produites par recuit sous traction selon l'invention. Pour la fabrication de tores oblongs, des supports amagnétiques d'enroulage doivent être rajoutés au moment de l'enroulage de la bande issue du procédé de recuit sous traction et peuvent être ensuite enlevés après l'enrobage ou l'imprégnation du tore, ou bien encore être conservés.

Par ailleurs, il peut être intéressant d'utiliser un mandrin magnétique ou un mandrin avec aspiration pour immobiliser sur le mandrin le début de ruban.

D'une manière générale, les conditions de cristallisation de la bande à l'intérieur du four en recuit (3) sous tension sont telles que la bande comporte au moins 50% en volume de nanocristaux dont la taille est comprise entre 2 et 20 nm. Les différents cristaux sont séparés les uns des autres par la matrice constituée par la fraction de l'alliage restée amorphe.

L'un des avantages du procédé selon l'invention est de pouvoir mettre en oeuvre une gamme de contraintes de traction très large, allant de 2 à 1000 MPa. Ceci permet d'atteindre des perméabilités comprises entre 50 et 5000.

En particulier, en utilisant une contrainte de traction supérieure à 250 MPa, et mieux supérieure à 500 MPa, il est possible de fabriquer une bande nanocristalline présentant une perméabilité comprise entre 50 et 200, gamme qu'il n'était jusqu'ici pas possible d'atteindre par les procédés conventionnels (par ex FR 2 823 507). Ainsi, on a pu obtenir une perméabilité de l'ordre de 90 pour une contrainte de 400 MPa, et une perméabilité de 50 pour une contrainte de 700 MPa.

Par ailleurs, en faisant subir des contraintes de traction élevées au ruban amorphe, on peut réduire l'épaisseur de la bande nanocristalline de 3 à 10%, voire plus. Ainsi, un ruban d'une épaisseur de 20 $\mu$m pourra se voir transformé en une bande de 18 ou 19 $\mu$m. Cette réduction d'épaisseur de la bande nanocristalline a des conséquences sur les performances magnétiques des composants fabriqués à partir de celle-ci. En effet, elle permet de diminuer les courants induits dans le métal et donc les pertes magnétiques du futur noyau enroulé.

En outre, les présents inventeurs ont constaté que ces meilleures performances magnétiques sont obtenues sans dégradation du foisonnement de la bande, ce qui est tout à fait surprenant, car il est connu que plus l'épaisseur d'une feuille de métal enroulée diminue, plus le foisonnement de l'enroulement augmente.

De manière à réduire les courants induits dans le tore et les pertes magnétiques, il peut être nécessaire, en fonction des applications finales prévues pour le tore, de déposer ou de forme une couche d'isolation électrique sur la bande pour isoler les spires successives les unes des autres. On peut par exemple déposer en continu, sur la bande après recuit, une substance minérale sur une épaisseur d'un dixième de micromètres à quelques micromètres.

Une telle substance minérale déposée entre les spires peut être constituée par un lait de magnésie (MgO) dont l'eau est éliminée dans une opération ultérieure d'étuvage à basse température.

Plus généralement, on peut utiliser les compositions classiques suivantes :

- Poudre $SiO_2$, MgO, $Al_2O_3$ déposée en surface par immersion dans une résine, par pulvérisation, par électrophorèse ou par toute autre technique de dépôt,
- Dépôt de fines couches de $SiO_2$, MgO, $Al_2O_3$, en surface par pulvérisation CVD, PVD ou méthode électrostatique,
- Solution d'alkyl-silicate dans de l'alcool, mélangée à un acide pour former de la forstérite $MgSiO_4$ après traitement thermique,
- Solution obtenue par hydrolyse partielle de $SiO_2$ et de $TiO_2$ mélangés à diverses poudres céramiques,
- Solution contenant principalement un polytitano-carbonate appliquée sur le ruban puis chauffée,
- Solution de phosphate appliquée et chauffée,
- Solution d'isolation formée par application d'un agent d'oxydation et chauffage.

De préférence, la couche d'isolation est déposée soit sur la bande déroulée de la bobine obtenue à l'issue du recuit, avant ré-enroulage sous la forme d'un ou plusieurs tores pour composant électromagnétique, soit en ligne en sortie de bloc en S moteur avant enroulage en bobine. Dans les deux cas ce dépôt est suivi en général d'un recuit à basse température pour assurer la polymérisation ou la déshydratation.

On peut également utiliser un revêtement préalable au recuit de cristallisation ayant des propriétés isolantes, déposé sur une épaisseur de 1/10 de micromètre à quelques dizaines de micromètres sur le ruban amorphe, ce revêtement résistant aux températures du recuit flash et aux fortes tractions du recuit. On peut par exemple, utiliser comme revêtement préalable de la bande amorphe, du méthylate de magnésium.

Ce type d'enduction pour isolation préalable au recuit ou pour isolation électrique de la bande recuite peut être fait par tout moyen adapté, et en particulier par enduction entre deux rouleaux, ou par dépôt de type CVD ou PVD, ou par pulvérisation, ou par lit fluidisé, etc., avec une étape complémentaire éventuelle de séchage et/ou de polymérisation et/ou de réticulation, en fonction de la nature de la matière isolante, du type de monomère et de la présence de solvant, entre autres.

Lorsque l'on utilise un revêtement isolant minéral (résistant à la température), l'enduction est de préférence effectuée sur le ruban amorphe, avant le recuit de nanocristallisation, et de façon particulièrement préférée, avant le bloc en S d'entrée. Les présents inventeurs ont constaté qu'une partie de la matière isolante se détache du ruban amorphe lors du passage dans le four de recuit, mais surtout que l'isolant résiduel permet de renforcer les caractéristiques mécaniques du ruban en diminuant sa fragilité.

En outre, la traction nécessaire pour obtenir un niveau de perméabilité prédéfini se trouve alors réduite. On peut donc atteindre des perméabilités encore plus faibles en augmentant la traction.

De façon tout à fait différente et complémentaire à l'isolation interspire, il est également possible d'enrober les tores selon l'invention -préalablement enroulés en tore selon les prescriptions géométriques dictées par l'application - par une matière plastique, telle qu'une résine époxy par exemple, cette résine pouvant être appliquée à chaud ou à froid. On a constaté qu'un enrobage de ce type ne dégradait absolument pas les performances magnétiques des tores, même lorsque la résine est appliquée à une température de l'ordre de 200°C. Cet enrobage pénètre très peu entre les spires et a pour fonction de rigidifier et protéger le tore des contraintes de bobinage, de protéger l'isolant électrique du fil de bobinage des blessures par les bords coupants de la bande enroulée, d'assurer une bonne isolation diélectrique entre tore enroulé et les bobinages.

Outre les revêtements d'isolation électrique interspire ou l'enrobage extérieur du tore pour protection électrique et mécanique du tore et de son bobinage, qui viennent d'être décrits, il est également possible d'imprégner les intervalles existants entre les spires d'un tore selon l'invention, à l'aide d'une résine fluide et durcissante spécifique sans dégradation sensible de sa perméabilité. Dans cet état le tore devient très rigide, monobloc et ainsi apte à la découpe.

Le tore imprégné ainsi produit peut alors être coupé en 2C avec un accroissement du champ coercitif $H_c$ ne dépassant pas 50 %, tandis que la perméabilité $\mu_1$ du circuit magnétique réalisé avec les 2C jointifs peut être réglée par surfaçage adéquat des surfaces de coupe à un niveau plus faible d'au plus 50 % par rapport à $\mu$.

Si, par exemple, on produit un tore imprégné selon l'invention et dont la perméabilité s'élève à $\mu=300$, on pourra obtenir une perméabilité $\mu_1$ comprise entre 150 et 300. Cette diminution est due à l'entrefer résiduel issu de la découpe.

On voit donc qu'il est possible de mettre à disposition un tore à faible perméabilité ayant toutes les performances des nanocristallins recuits sous contrainte qui ont été décrites précédemment, ainsi qu'une géométrie à 2C permettant d'obtenir un composant final compact et ne présentant pas d'entrefer autre que résiduel, qui pourrait générer des perturbations des champs magnétiques extérieurs et des échauffements localisés vers les zones d'entrefer.

### Essais

Une série de coulées 1 à 19, dont les compositions sont rassemblées dans le tableau 1, ont été réalisées pour obtenir des rubans amorphes selon le procédé classique de trempe sur une roue refroidie.

Ces rubans ont ensuite été soumis à différents procédés de recuit, procédés dont les caractéristiques sont rassemblées dans le tableau 2.

Une fois transformées en bandes nanocristallines par recuit sous contrainte, celles-ci ont été soumises à un certain nombre de tests de caractérisation dont les résultats sont eux aussi rassemblés dans le tableau 2.

Dans le cadre de ces essais, on appelle :

- RP : le procédé de recuit sous contrainte des nanocristallins déjà connu, utilisant un ou deux couples au moins de rouleaux pinceurs (cf. brevet FR 2 823 507).
- Direct : le procédé de recuit sous contrainte des nanocristallins déjà connu, utilisant une traction directe du ruban par les bobines d'enroulage et de déroulage (cf. brevet FR 2 823 507).
- BS : le procédé de recuit sous contrainte des nanocristallins tel que décrit dans cette invention et utilisant, par exemple, un bloc en S en entrée du four de recuit et un bloc en S à la sortie de ce four.

On utilise également les symboles suivants :

$D_{MIN}$    rayon de courbure en limite de rupture de la bande,
$T_{TTH}$    température de recuit de nanocristallisation,
$\sigma$    contrainte de traction lors du recuit,
$\mu r$    perméabilité relative,
$\Delta T$    plage des valeurs de la température de recuit permettant d'obtenir $D_{MIN} \leq 3$ mm pour toute la plage de $\mu r$ accessible,
$Br$    Br induction rémanente, .
$Bm$    induction à 20 Oe dite induction d'approche à saturation,
$B(200)$    induction saturante à 200 Oe, 1 Oe = 79,5775 A/m,
$Hc$    champ coercitif.

On entend par "plage de $\mu r$" l'étendue de valeurs de $\mu r$ accessible à une coulée donnée pour des caractéristiques données de procédé, à l'intérieur de la plage maximale de $\mu r$ de 50 à 5000.

Détermination de $D_{MIN}$

Le rayon de courbure en limite de rupture de la bande $D_{MIN}$ est mesuré en plaçant la bande sur une série de formes calibrées en ½ rond, dont le diamètre va en décroissant, jusqu'à ce que la bande se brise. On utilise successivement et par valeurs décroissantes des diamètres de 5 à 2,5mm par pas de 0,1 mm.

Détermination de $\Delta T$

$\Delta T$ est la plage des valeurs de la température de recuit permettant d'obtenir $D_{MIN} \leq 3$ mm pour toute la plage

de $\mu r$ accessible. En effet, on considère que la fragilité de la bande est compatible avec un procédé à l'échelle industrielle lorsque $D_{MIN}$ est inférieur à 3mm.

Pour déterminer la valeur de $\Delta T$, on mesure donc $D_{MIN}$ pour des bandes de diverses perméabilités, obtenues en faisant varier la contrainte de traction lors du recuit, et ceci pour différentes valeurs de la température de recuit $T_{TTH}$. Ainsi, pour une coulée de composition N°1 (cf. tableau 1), on a obtenu les valeurs suivantes de $D_{MIN}$:

| $T_{TTH}$ (°C) | Perméabilité $\mu r$ | | | | |
|---|---|---|---|---|---|
| | 200 | 300 | 600 | 1000 | 1700 |
| 570 | 1,9 | * | 1,9 | 2,0 | 2,3 |
| 590 | 1,7 | * | 2,2 | 2,7 | 2,7 |
| 600 | 2,5 | 2,7 | 3,1 | 3,5 | 3,6 |
| * : essais non réalisés. | | | | | |

Dans cet exemple, la valeur de $\Delta T$ est estimée à 30°C entre 560 et 595°C.

On constate que plus la perméabilité augmente, plus $D_{MIN}$ augmente, pour se stabiliser vers $\mu$ = 1500 - 2000. Le ruban le moins fragile est donc celui qui a la plus faible perméabilité, ce qui est un avantage supplémentaire de miniaturisation pour les applications de type lissage/stockage d'énergie.

On note aussi que $D_{MIN}$ est très sensible à la température de recuit sous traction. Ainsi, un écart de 30°C fait passer toutes les bandes dont la perméabilité est supérieure à 500 d'un état de faible fragilité obtenue à 570°C ($D_{MIN} \leq 3$ mm) à un état de plus en plus fragile ($D_{MIN}$ pouvant atteindre 3,6 mm).

**Tableau 1**

| Coulée | % Co | %NI | %Cu | %SI | %B | %Nb | %M' | %M" |
|---|---|---|---|---|---|---|---|---|
| 1 | 0 | 0 | 1,0 | 15,3 | 6,5 | 2,96 | | |
| 2 | 1,7 | 0 | 1,0 | 15,3 | 6,5 | 2,96 | | |
| 3 | 5,0 | 0 | 1,0 | 15,3 | 6,5 | 2,96 | | |
| 4 | 5,0 | 0 | 1,0 | 15,3 | 6,5 | 2,96 | | |
| 5 | 10 | 0 | 1,0 | 15,3 | 6,5 | 2,96 | | |
| 6 | 0 | 0 | 1,5 | 15,5 | 7 | 3,02 | | |
| 7 | 0 | 0 | 0,7 | 15,2 | 6,8 | 2,98 | | |
| 8 | 0 | 0 | 1,02 | 15,1 | 6,6 | 3,9 | | |
| 9 | 0 | 0 | 0,97 | 15,4 | 6,7 | 6 | | |
| 10 | 0 | 0 | 0,99 | 14,4 | 6,4 | 2,97 | Cr : 0,98 | |
| 11 | 0 | 0 | 1,03 | 14,1 | 6,3 | 2,88 | Al : 1,53 | |
| 12 | 0 | 0 | 1,1 | 15,3 | 5,3 | 2,95 | | C : 1,22 |
| 13 | 0 | 0 | 1,01 | 13,1 | 6,2 | 2,99 | V : 2,4 | |
| 14 | 0 | 0 | 1,02 | 12,6 | 6,3 | 2,98 | | Ge : 2,6 |
| 15 | 0 | 0 | 1,02 | 13,5 | 8,5 | 2,98 | | |
| 16 | 0 | 0 | 0,99 | 11,5 | 6,6 | 3,01 | | |
| 17 | 0 | 0 | 0,98 | 15,2 | 8,4 | 2,98 | | |
| 18 | 2,0 | 1,0 | 1,0 | 15,3 | 6,5 | 2,98 | | |
| 19 | 2,2 | 3,0 | 1,0 | 15,3 | 6,5 | 2,95 | | |

**Tableau 2**

| Essai | Coulée N° | Type Procédé | $D_{MIN}$ (mm) | $T_{TTH}$ (°C) | Vitesse (cm/s) | Plage $\sigma$ (MPa) | $\Delta T$ plage de $T_{TTH}$ | Nb de Casse par km | Br/ Bm (%) | Plage de $\mu r$ | Hc (A/m) | B(200) (1kG=O, IT) (kG) | Essai vérifiant l'invention |
|---|---|---|---|---|---|---|---|---|---|---|---|---|---|
| | | | | | **Paramètres process** | | | | | | **Résultats** | | |
| A | 1 | RP | ≤ 2,5 | 660 | 3 | ≤500 | 30 | > 50 | < 1 | ≥200 | 2 à 5 | ≥12 | |
| B | 1 | direct | ~ 3 | 655 | 1 | ≤300 | 30 | > 10 | < 1 | ≥300 | 2 à 5 | ≥12 | |
| C | 1 | BS | ≤2,5 | 590 | ≥10 | ≤1000 | 30 | < 5 | < 1 | ≥50 | 3 | ≥12 | X |
| D | 2 | direct | 3 | 665 | 1 | ≤300 | 30 | > 10 | 1 | ≥350 | 6 | ≥12 | |
| D' | 2 | BS | ≤2,2 | 595 | ≥10 | ≤1000 | 30 | <5 | <3 | ≥300 | 4 | ≥12 | X |
| E | 3 | direct | 3 | 665 | 1 | ≤300 | 30 | > 10 | 2 | ≥500 | 7 | 12 | |
| E' | 3 | BS | 2,7 | 625 | ≥ 10 | ≤1000 | 30 | <5 | <3 | ≥600 | 6 | 12 | X |
| F | 4 | BS | 2,5 | 610 | ≥10 | ≤500 | 30 | < 5 | 2 | ≥280 | 6,5 | 12 | X |
| G | 5 | BS | 3 | 670 | 1 | ≤300 | 30 | 20 | 4-5 | ≥500 | 10 | 11,5 | |
| H | 6 | BS | ≤2,5 | 580 | ≥10 | ≤1000 | 30 | < 5 | < 1 | ≥50 | 1 à 5 | ≥ 12 | X |
| I | 7 | BS | 2,5 | 605 | ≥10 | ≤1000 | 30 | < 5 | < 1 | ≥50 | 2 à 6 | ≥12 | X |
| J | 8 | BS | 2,7 | 630 | 5 | ≤1000 | 40 | < 5 | < 1 | ≥ 70 | 2 à 5 | 12 | X |
| K | 9 | BS | 3,8 | 700 | 0,5 | ≤300 | 50 | < 5 | 1,7 | ≥200 | 8 | 11,2 | |
| L | 10 | BS | 2,6 | 590 | ≥10 | ≤1000 | 20 | < 5 | 1,3 | ≥80 | 2 à 6 | ≥12 | X |
| M | 11 | BS | ≤2,5 | 590 | ≥10 | ≤500 | 20 | < 5 | 1,8 | ≥150 | 2 à 7 | ≥12 | X |
| N | 12 | BS | 2,8 | 610 | 10 | ≤1000 | 13 | < 5 | < 1 | ≥70 | 2 à 6 | ≥12 | X |
| 0 | 13 | BS | 3,4 | 620 | 3 | ≤1000 | <10 | > 10 | 3,0 | ≥300 | 4 à 9 | ≥12 | |
| P | 14 | BS | 2,7 | 600 | ≥10 | ≤1000 | <10 | < 5 | 2,7 | ≥100 | 8 à 12 | ≥12 | |
| R | 15 | BS | ≤2,5 | 615 | 3,3 | 50 | 30 | < 5 | 5 | ≥100 | 5,6 | ≥12 | X |
| S | 15 | BS | ≤2,5 | 640 | 3,3 | 50 | 30 | < 5 | 3 | ≥100 | 7 | ≥12 | X |
| T | 15 | BS | ≤2,5 | 650 | 3,3 | 50 | 30 | < 5 | 17 | ≥100 | 91 | ≥12 | |
| U | 16 | BS | ≤ 2,5 | 620 | 3,3 | 50 | 20 | < 5 | 8 | ≥300 | 8 | ≥12 | X |

(suite)

| Essai | Coulée N° | Type Procédé | $D_{MIN}$ (mm) | $T_{TTH}$ (°C) | Vitesse (cm/s) | Plage $\sigma$ (MPa) | $\Delta T$ plage de $T_{TTH}$ | Nb de Casse par km | Br/ Bm (%) | Plage de $\mu$r | Hc (A/m) | B(200) (1kG=O, IT) (kG) | Essai vérifiant l'invention |
|---|---|---|---|---|---|---|---|---|---|---|---|---|---|
| | | | | | | **Paramètres process** | | | | | **Résultats** | | | |
| V | 17 | BS | ≤2,5 | 550 | 1,6 | 50 | 0 | < 5 | 15,3 | ≥300 | 13,6 | 11,8 | |
| W | 17 | BS | ≤2,5 | 550 | 2,4 | 50 | 0 | < 5 | 2,6 | ≥300 | 14 | 11,8 | |
| X | 17 | BS | ≤2,5 | 550 | 3,2 | 50 | 0 | < 5 | 9 | ≥300 | 26,4 | 11,8 | |
| Y | 18 | BS | ≤2,5 | 600 | 2,6 | ≤1000 | 30 | <5 | <2 | ≥350 | 4,5 | >12 | X |
| Z | 19 | BS | ≤2,5 | 610 | 2,6 | ≤1000 | 30 | <5 | <3 | ≥400 | 4,8 | >12 | X |

## Exemple 1 -Influence de la composition de la nuance

Influence de la teneur en bore

Les exemples V, W et X, dont la teneur en bore est de 8,4% présentent une fragilité d'un niveau correct, avec un taux de casse inférieur à 5 casses/km.

Mais, avec ce pourcentage élevé en bore, la cristallisation au défilé sous contrainte est rendue difficile, et en particulier plus lente que tous les essais industrialisables tels que C, D, E et F par exemple ce qui oblige à diminuer la vitesse de défilement à moins de 4 cm/sec, et ce qui limite la plage de perméabilité accessible à des perméabilités supérieures à 300. En conséquence, la teneur maximale en bore doit être limitée à 8%.

Par ailleurs, l'exemple N montre que 1,22 % de carbone en substitution partielle du bore dégrade très peu les performances du produit.

Influence de la teneur en niobium

L'exemple J montre que si on utilise un pourcentage de niobium de l'ordre de 3,9%, les performances magnétiques sont globalement conservées avec cependant une baisse de l'induction saturante B(200 Oe) à 12 KG au lieu de 12,5 KG, pour une composition telle que celle utilisée pour les exemples A à C, qui ne contient que 2,96% de niobium (200 Oe = 15,92 kA/m).

De plus la vitesse de défilement doit être considérablement baissée pour permettre l'obtention d'un ruban recuit sous contrainte avec les performances requises de courbure limite ($\leq$ 3 mm) et de plage de perméabilité accessible.

Si on accroît le pourcentage de niobium à 6% (exemple K), la plage de réglage en température s'accroît encore (50°C) et la plage de perméabilité accessible reste encore attractive ($\mu_{min}$ = 200). Mais, l'induction saturante B(200 Oe) se dégrade significativement à 11,2 KG, ce qui ne permet pas de fabriquer des composants aussi compacts qu'on le souhaiterait.

En outre, le diamètre limite pour l'enroulage en tore à partir de la bande nanocristallisée sous contrainte s'accroît nettement à 3,8 mm, ce qui témoigne d'une fragilisation de la bande, qui la rend très difficile à manipuler industriellement sans risque de casses fréquentes.

Influence de la teneur en cuivre

Les exemples H et 1 montrent que s'écarter quelque peu d'une teneur de 1% en cuivre, pour atteindre respectivement 1,5 ou 0,7 %, ne dégrade pas significativement les performances.

Influence de la teneur en silicium

Par rapport aux rubans des exemples A à C qui contiennent 15,3% de silicium, on constate (essais R à U) que, si on abaisse le pourcentage en silicium à 13,5%, le métal reste apte à la production industrielle (< 5 casses/km), la plage de perméabilité accessible reste vaste ($\mu_{min}$ =100) mais les conditions du procédé BS selon l'invention deviennent plus critiques vis à vis des caractéristiques magnétiques telles que le champ coercitif Hc.

Ainsi pour des températures de recuit de 615 et 640°C, Hc reste inférieur ou égal à 7 A/m mais, dès 650°C, Hc croît très significativement (exemple T), ce qui n'empêche pas une production industrielle, puisque la plage $\Delta$T de réglage de température de recuit sous contrainte reste élevée (~ 30°C). Cependant si on baisse encore le pourcentage en silicium jusqu'à atteindre 11,5 (exemple U), le champ coercitif se dégrade pour atteindre 8 A/m lorsqu'on se trouve dans les conditions optimales de fragilité, provoquant des pertes magnétiques trop élevées pour le tore enroulé.

Influence de la teneur en élément de type M'

Il faut limiter la teneur possible de ces métalloïdes de substitution au silicium à au plus 2%. Les exemples L et M montrent en effet que des teneurs de 1% en chrome ou de 1,5% en aluminium ne nuisent pas à l'intérêt du produit final lorsqu'ils sont substitués au silicium.

En revanche, l'exemple O montre qu'une teneur de 2,4% en vanadium accroît nettement la fragilité du ruban (> 10 casses/km) ce qui amène à réduire la vitesse au défilé admissible du fait de cette fragilité accrue. Dans le même temps, le champ coercitif Hc se dégrade et la plage de température $\Delta$T du procédé sur laquelle des performances correctes peuvent être obtenues devient trop faible (< 10°C), rendant la bande impropre à une fabrication industrielle. De plus la plage de $\mu$r accessible est réduite à $\mu$r $\geq$ 300

Influence de la teneur en élément de type M''

L'exemple P montre que, lorsqu'on substitue du silicium par 2,6% de germanium, le champ coercitif Hc est très dégradé ($\geq 8$ A/m) et la plage de température de recuit $\Delta T$ accessible est faible alors que les autres caractéristiques restent tout à fait intéressantes.

Influence de la teneur en cobalt

Les exemples D et E montrent que l'addition modérée de cobalt en substitution partielle au fer, à hauteur de 1,7% et 5%, dégrade la plage de perméabilité $\mu$ accessible par le procédé "direct", puisque $\mu_{min}$ passe de 300 à 350 et de 300 à 500, respectivement

Dans le cas du procédé BS selon l'invention, la teneur admissible en cobalt apparaît être 0,05 (exemple F : $\mu_{min}$ = 300) alors qu'avec 10% de cobalt, on ne peut accéder par le procédé à une perméabilité inférieure à 500 (exemple G).

Des essais complémentaires sur les exemples C, D', E', Y et Z ont permis de déterminer les valeurs de leurs pertes magnétiques à 500 kHz (50mT, 27°C) ainsi que de déterminer la stabilité en température de leurs valeurs de perméabilités entre 25 et 150°C et leurs magnétostriction apparentes à saturation $\lambda s$

| Essai | %Co | %Ni | %Co+%Ni | $\mu(150°C)/\mu$ (25°C) | Pertes magnétiques (en mW/cm³) | Plage de $\mu r$ | Hc (A/m) | $\lambda s$ (ppm) |
|---|---|---|---|---|---|---|---|---|
| C | 0 | 0 | 0 | 1,2 | 230 | $\geq 50$ | 3 | 0,5 |
| D' | 1,7 | 0 | 1,7 | 1,4 | 480 | $\geq 300$ | 4 | 0,8 |
| E' | 5,0 | 0 | 5,0 | 1,5 | 1225 | $\geq 600$ | 6 | 1,3 |
| Y | 2,0 | 1,0 | 3,0 | 1,45 | 610 | $\geq 350$ | 4,5 | 1 |
| Z | 2,2 | 3,0 | 5,2 | 1,6 | 780 | $\geq 400$ | 4,8 | 1,5 |

On constate que, pour des essais selon le procédé BS, l'augmentation de la teneur en cobalt dégrade en outre le champ coercitif Hc ainsi que le niveau de pertes magnétiques. Ces deux points ne permettant pas d'obtenir un alliage très sensible aux petits signaux dans les dispositifs de mesure, ni qui soit faiblement dissipatif. En conséquence on se limite en cobalt à au plus 5,75at% environ (a $\leq$ 0,07).

Par ailleurs, l'accroissement des teneurs cumulées en cobalt et nickel dégradent la magnétostriction apparente à saturation $\lambda s$, ce qui rend l'alliage sensible aux contraintes externes (collage, enrobage, imprégnation, découpe, manutention). Cet accroissement dégrade aussi la stabilité en température de la perméabilité entre 25 et 150°C. En conséquence on se limite en nickel à au plus 8,25 at% environ (b $\leq$ 0,1) et, de préférence, à des teneurs cumulées en Ni et Co d'au plus 8,25 at% (a+b $\leq$ 0,1).

## Exemple 2 - Foisonnement

Afin d'étudier l'influence de la contrainte appliquée (sur le ruban) sur le foisonnement du tore nanocristallin, on a préparé une série de rubans amorphes dont la composition est conforme à la coulée 1 du tableau 1, et on les a soumis à des contraintes de traction croissantes. Les conditions des essais ainsi que les résultats obtenus en terme de réduction d'épaisseur ($\Delta Ep/Ep$) et de foisonnement sont rassemblés dans le tableau 3 :

**Tableau 3**

| Contrainte (MPa) | Epaisseur ($\mu m$) | $\Delta Ep/Ep$ | Foisonnement (%) |
|---|---|---|---|
| 0 | 17,9 | | 87,1% |
| 19,9 | 17,8 | -0,6% | 86,7% |
| 39,8 | 17,7 | -1,2% | 87,7% |
| 79,5 | 17,4 | -2,8% | 87% |
| 119 | 17,2 | -4,1% | 86,2 % |

(suite)

| Contrainte (MPa) | Epaisseur ($\mu$m) | $\Delta$Ep/Ep | Foisonnement (%) |
|---|---|---|---|
| 171 | 16,8 | -6,4% | 84,6 % |
| 200 | 16,6 | -8,4% | 85,3% |
| 300 | 16,1 | -11% | 85,7% |
| 500 | 14,9 | -16,8% | 84,5% |

On constate que le procédé selon l'invention permet de réduire l'épaisseur de la bande nanocristalline sans dégradation significative du foisonnement, ce qui n'était aucunement prévisible.

Du point de vue des applications possibles des bandes nanocristallines selon l'invention, on peut citer à titre indicatif et non limitatif :

➢ des capteurs de courant à forte composante continue superposée, en particulier utilisé dans certains modèles des compteurs d'énergie ;
➢ des sondes de courant large bande de fréquence, avec ou sans blindage, avec utilisation par exemple dans le contrôle de courant en temps réel des composants actifs d'électronique de puissance tels que GTO, IGBT, etc. ;
➢ des inductances de lissage ou de stockage d'énergie pour tout type de structure de convertisseur d'électronique de puissance, tel que PFC, push pull, flyback, forward, etc., permettant:

■ de réduire le volume du composant grâce à l'accès à des perméabilités faibles, avec des pertes magnétiques réduites et une aimantation à saturation $J_s$ élevée sous de fortes contraintes de courant continu superposé ;
■ d'assurer une inductance L très peu dépendante du courant çontinu superposé et très reproductible ($\leq$ 10 %, de préférence $\leq$ 5 %) en production industrielle ;
■ d'éviter tout bruit acoustique dû à la magnétostriction ;
■ d'éviter tout problème lié à la compatibilité électromagnétique :
■ d'éviter tout échauffement localisé du circuit magnétique.

■ des transformateurs HF (supérieurs à quelques centaines de kHz) comprenant des tores non coupés selon l'invention, pour une utilisation dans des alimentations à résonance, par exemple. Le tore selon l'invention est ici avantageux pour sa fréquence de coupure élevée qui peut atteindre de 20 à 200 MHz pour des perméabilités de 50 à 300, avec de faibles pertes magnétiques et une forte induction de travail accessible ($J_s$> 1 T).
■ des selfs de mode commun à filtrage HF comprenant des tores non coupés selon l'invention, qui présentent l'avantage de pouvoir miniaturiser le composant grâce à la fois à un $J_s$ élevé et une grande fréquence de coupure allant de 1 à 200 MHz, et de façon préférée supérieure à 10 MHz.

**Revendications**

**1.** Procédé de fabrication d'une bande en matériau nanocristallin obtenue à partir d'un ruban coulé dans un état amorphe, de composition atomique :

$$[Fe_{1-a-b}Co_aNi_b]_{100-\times-y-z-\alpha-\beta-\gamma}Cu_{\times}Si_yB_zNb_{\alpha}M'_{\beta}M''_{\gamma}$$

M' étant l'un au moins des éléments V, Cr, Al et Zn,
M" étant l'un au moins des éléments C, Ge, P, Ga, Sb, In et Be, avec :

$$a\leq0,07 \text{ et} \qquad b\leq0,1$$
$$0,5\leq\times\leq1,5 \quad \text{et} \quad 2\leq\alpha\leq5$$
$$10\leq y\leq16,9 \quad \text{et} \quad 5\leq z\leq8$$
$$\beta\leq2 \quad \text{et} \quad \gamma\leq2$$

et en soumettant le ruban amorphe à un recuit de cristallisation, dans lequel on soumet le ruban au recuit à l'état déroulé, en défilement au travers d'au moins deux blocs en S et sous tension dans une direction sensiblement longitudinale axiale du ruban, de telle sorte que le ruban soit maintenu à une température de recuit comprise entre 530°C et 700°C, pendant une durée comprise entre 5 et 120 secondes, sous une contrainte de traction axiale comprise entre 2 et 1000 MPa, la contrainte de traction subie par ledit ruban amorphe, sa vitesse de défilement lors dudit recuit, le temps et la température de recuit étant choisis de telle sorte que le profil de section de la bande ne soit pas en forme de $\Omega$, et présente une flèche maximale de la section transversale de la bande inférieure à 3% de la largeur de la bande, et de préférence inférieure à 1% de la largeur.

2. Procédé selon la revendication 1, dans lequel la vitesse de défilement de la bande est supérieure ou égale à 10 cm par seconde et par mètre de zone utile de four.

3. Procédé selon l'une ou l'autre des revendications 1 ou 2, dans lequel la contrainte de traction axiale est supérieure à 500 MPa.

4. Procédé selon l'une quelconque des revendications 1 à 3, dans lequel le taux de casse du ruban amorphe en défilement est inférieur à 10 casses par kilomètre de ruban.

5. Procédé selon l'une quelconque des revendications 1 à 4, dans lequel en outre, y est supérieur ou égal à 12.

6. Procédé selon l'une quelconque des revendications 1 à 5, dans lequel :

$$a \leq 0{,}04 \quad \text{et} \quad b \leq 0{,}07$$
$$0{,}5 \leq x \leq 1{,}5 \quad \text{et} \quad 2 \leq \alpha \leq 5$$
$$13 \leq y \leq 16{,}6 \quad \text{et} \quad 5{,}8 \leq z \leq 8$$
$$\beta \leq 2 \quad \text{et} \quad \gamma \leq 2$$

7. Procédé selon la revendication 6, dans lequel :

$$a \leq 0{,}02 \quad \text{et} \quad b \leq 0{,}05$$
$$0{,}5 \leq x \leq 1{,}5 \quad \text{et} \quad 2{,}5 \leq \alpha \leq 4$$
$$14{,}5 \leq y \leq 16{,}5 \quad \text{et} \quad 5{,}8 \leq z \leq 7{,}5$$
$$\beta \leq 1 \quad \text{et} \quad \gamma \leq 1$$

8. Procédé selon l'une quelconque des revendications 1 à 6, dans lequel :

$$\mathbf{a+b \leq 0{,}1}$$

9. Procédé selon l'une quelconque des revendications 1 à 8, dans lequel :

$$\mathbf{a = 0}$$

10. Procédé selon l'une quelconque des revendications 1 à 9, dans lequel :

$$\mathbf{b = 0}$$

11. Bande en matériau nanocristallin pouvant être obtenue par la mise en oeuvre du procédé selon l'une quelconque des revendications 1 à 10, apte à subir en tout endroit de cette bande, un pliage avec un diamètre de courbure d'au plus 3mm, sans présenter de casse ni de fissure.

12. Bande selon la revendication 11, obtenue par la mise en oeuvre du procédé selon l'une quelconque des revendications 1 à 10, à partir d'un ruban amorphe, l'épaisseur de ladite bande étant réduite d'au moins 10% par rapport à l'épaisseur dudit ruban amorphe.

13. Bande selon l'une ou l'autre des revendications 11 ou 12, dont le champ coercitif est inférieur ou égal à 7A/m, et de préférence inférieur ou égal à 5A/m.

14. Bande selon l'une quelconque des revendications 11 à 13, 1 dont l'induction à 15,92 kA/m (200 Oe) est supérieure ou égale à 1,2 T (12kG).

15. Tore en matériau nanocristallin pouvant être obtenu par la mise en oeuvre du procédé selon l'une quelconque des revendications 1 à 10, à l'issue duquel on enroule ladite bande nanocristalline, et dont la perméabilité est supérieure ou égale à 50 et inférieure à 200, et dont la fréquence de coupure est comprise entre 30 et 200MHz.

16. Tore en matériau nanocristallin pouvant être obtenu par la mise en oeuvre du procédé selon l'une quelconque des revendications 1 à 10, à l'issue duquel on enroule ladite bande nanocristalline et dont le diamètre est inférieur ou égal à 10 mm.

17. Tore selon l'une quelconque des revendications 15 ou 16, présentant une diminution du foisonnement d'au plus 3% par rapport au foisonnement obtenu par enroulement d'une bande de même composition ayant subi un recuit de cristallisation sans contrainte, et ce pour une réduction d'épaisseur de la bande nanocristallisée allant jusqu'à 10% par rapport à l'épaisseur du ruban amorphe de départ.

18. Tore selon l'une quelconque des revendications 15 à 17, obtenu par mise en oeuvre du procédé selon l'une quelconque des revendications 1 à 10, à l'issue duquel on enroule une première fois ladite bande nanocristalline sur un premier mandrin, puis par déroulage et enroulage ultérieur sur un second mandrin, le diamètre du second mandrin étant inférieur au diamètre du premier mandrin.

19. Capteurs de courant apte à mesurer un courant comportant une forte composante continue et pouvant être utilisé dans un compteur d'énergie à simple ou double étage, comprenant au moins un tore en matériau nanocristallin obtenu par le procédé selon l'une quelconque des revendications 6 à 10:

20. Inductance de stockage ou de filtrage, indépendante du niveau de composante continue superposée, pouvant être utilisée dans un compteur d'énergie, comprenant au moins un tore en matériau nanocristallin obtenu par le procédé selon l'une quelconque des revendications 6 à 10.

21. Dispositif (1) de fabrication d'un tore magnétique à partir d'un ruban (R) coulé dans un état amorphe, par recuit dudit ruban (R) amorphe, **caractérisé en ce qu'**il comporte :

  - un arbre de réception (2) d'une bobine de ruban (R) à l'état amorphe,
  - un four à passage (3) régulé en température,
  - au moins un bloc en S (4) situé avant l'entrée du ruban (R) dans le four (3) et relié à un moteur frein (5),
  - un dispositif (6) de réglage d'une contrainte de traction dans la direction axiale dudit ruban amorphe (R) et de la bande (N) en matériau nanocristallin, ledit dispositif (6) comprenant un dispositif de mesure d'effort relié à un module de commande du moteur frein (5) dudit bloc en S situé (4) avant l'entrée du ruban (R) dans le four (3),
  - au moins un bloc en S (7) situé après la sortie de la bande (N) du four à passage (3) et relié à un moteur,
  - au moins un mandrin d'enroulement (8) pour l'enroulement de la bande (N) obtenue après recuit sous la forme d'un tore en matériau nanocristallin,

le ruban amorphe (R) passant d'une bobine de stockage du ruban amorphe (R) engagée sur ledit arbre de réception (2) à la bobine de bande (N) en matériau nanocristallin, successivement à travers le bloc en S (4) situé avant l'entrée du ruban (R) dans le four (3), puis à travers le dispositif de mesure d'effort (6), puis à travers le four (3), puis à travers le bloc en S (7) situé après la sortie de la bande (N) du four (3).

22. Dispositif (1) selon la revendication 21, comprenant un premier mandrin d'enroulement de la bande et un second mandrin d'enroulement de la bande, de sorte qu'on puisse, après enroulement d'un premier tore sur le premier mandrin, couper la bande (N) et engager une partie de tête de la bande (N) sur le second mandrin, pour réaliser l'enroulement d'un second tore, sans interrompre la fabrication.

23. Dispositif (1) selon la revendication 21, comprenant un seul mandrin d'enroulement (8) de la bande (N) et un accumulateur de bande (9) en aval dudit bloc en S (7) de sortie du four (3), permettant de changer de bobine d'enroulage sans interrompre la fabrication.

24. Dispositif (1) selon l'une quelconque des revendications 21 à 23, comprenant en outre au moins un galet presseur (10) qui vient comprimer la bande (N) recuite lors de son passage dans le bloc en S (7) situé après la sortie de la bande (N) du four à passage (3).

25. Dispositif (1) selon l'une quelconque des revendications 21 à 24, comprenant en outre au moins un galet bombé qui vient comprimer le ruban amorphe (R) lors de son passage dans le bloc en S (4) situé avant l'entrée dudit ruban (R) dans le four (3).

**Claims**

1. Process for the manufacture of a strip made of nanocrystalline material which is obtained from a ribbon cast in an amorphous state, with the atomic composition:

$$[Fe_{1-a-b}Co_aNi_b]_{100-x-y-z-\alpha-\beta-\gamma}CU_xSi_yB_zNb_\alpha M'_\beta M''_\gamma$$

M' being at least one of the elements V, Cr, Al and Zn,
M" being at least one of the elements C, Ge, P, Ga, Sb, In and Be, with:

| | | |
|---|---|---|
| $a \leq 0.07$ | and | $b \leq 0.1$ |
| $0.5 \leq x \leq 1.5$ | and | $2 \leq \alpha \leq 5$ |
| $10 \leq y \leq 16.9$ | and | $5 \leq z \leq 8$ |
| $\beta \leq 2$ | and | $\gamma \leq 2$ |

by subjecting the amorphous ribbon to a crystallization annealing in which the ribbon is subjected to the annealing in the unwound state, in forward progression through at least two S-type units and under tension in a substantially longitudinal axial direction of the ribbon, so that the ribbon is maintained at an annealing temperature of between 530°C and 700°C, for a period of time of between 5 and 120 seconds, under an axial tensile stress of between 2 and 1000 MPa, the tensile stress to which said amorphous ribbon is subjected, its rate of forward progression during said annealing, the annealing time and the annealing temperature being chosen so that the cross section profile of the strip is not Ω-shaped and exhibits a maximum deflection of the transverse cross section of the strip of less than 3% of the width of the strip and preferably of less than 1% of the width.

2. Process according to Claim 1, in which the rate of forward progression of the strip is greater than or equal to 10 cm per second and per meter of furnace working zone.

3. Process according to either of Claims 1 and 2, in which the axial tensile stress is greater than 500 MPa.

4. Process according to any one of Claims 1 to 3, in which the level of breakage of the amorphous ribbon in forward progression is less than 10 breakages per kilometer of ribbon.

5. Process according to any one of Claims 1 to 4, in which, in addition, y is greater than or equal to 12.

6. Process according to any one of Claims 1 to 5, in which:

| | | |
|---|---|---|
| $a \leq 0.04$ | and | $b \leq 0.07$ |
| $0.5 \leq x \leq 1.5$ | and | $2 \leq \alpha \leq 5$ |
| $13 \leq y \leq 16.6$ | and | $5.8 \leq z \leq 8$ |
| $\beta \leq 2$ | and | $\gamma \leq 2$ |

7. Process according to Claim 6, in which:

$$a \leq 0.02 \quad \text{and} \quad b \leq 0.05$$
$$0.5 \leq x \leq 1.5 \quad \text{and} \quad 2.5 \leq \alpha \leq 4$$
$$14.5 \leq y \leq 16.5 \quad \text{and} \quad 5.8 \leq z \leq 7.5$$
$$\beta \leq 1 \quad \text{and} \quad \gamma \leq 1$$

8. Process according to any one of Claims 1 to 6, in which:

$$a+b \leq 0.1$$

9. Process according to any one of Claims 1 to 8, in which:

$$a = 0$$

10. Process according to any one of Claims 1 to 9, in which:

$$b = 0$$

11. Strip made of nanocrystalline material which can be obtained by the implementation of the process according to any one of Claims 1 to 10, capable of being subjected, at any point on this strip, to bending with a diameter of curvature of at most 3 mm, without exhibiting breakage or cracking.

12. Strip according to Claim 11, obtained by the implementation of the process according to any one of Claims 1 to 10 starting from an amorphous ribbon, the thickness of said strip being reduced by at least 10% with respect to the thickness of said amorphous ribbon.

13. Strip according to either of Claims 11 and 12, the coercive field of which is less than or equal to 7 A/m and preferably less than or equal to 5 A/m.

14. Strip according to any one of Claims 11 to 13, the induction at 15.92 kA/m (200 Oe) of which is greater than or equal to 1.2 T (12 kG).

15. Core made of nanocrystalline material which can be obtained by the implementation of the process according to any one of Claims 1 to 10, on conclusion of which said nanocrystalline strip is wound, the permeability of which is greater than or equal to 50 and less than 200 and the cutoff frequency of which is between 30 and 200 MHz.

16. Core made of nanocrystalline material which can be obtained by the implementation of the process according to any one of Claims 1 to 10, on conclusion of which said nanocrystalline strip is wound and the diameter of which is less than or equal to 10 mm.

17. Core according to either one of Claims 15 and 16, exhibiting a deterioration in the dilatation of at most 3% in comparison with the dilatation obtained by winding a strip of the same composition which has been subjected to a stress-free crystallization annealing, this being the case for a reduction in thickness of the nanocrystallized strip ranging up to 10% with respect to the thickness of the starting amorphous ribbon.

18. Core according to any one of Claims 15 to 17, obtained by implementation of the process according to any one of Claims 1 to 10, on conclusion of which said nanocrystalline strip is wound a first time on a first spindle and then, by unwinding and subsequent winding, is wound on a second spindle, the diameter of the second spindle being less than the diameter of the first spindle.

19. Current sensor capable of measuring a current comprising a strong continuous component which can be used in a single-stage or two-stage energy meter, comprising at least one core made of nanocrystalline material obtained by the process according to any one of Claims 6 to 10.

20. Storage or filtering inductor which is independent of the level of superimposed continuous component and which can be used in an energy meter, comprising at least one core made of nanocrystalline material obtained by the process according to any one of Claims 6 to 10.

21. Device (1) for the manufacture of a magnetic core from a ribbon (R) cast in an amorphous state by annealing said amorphous ribbon (R), **characterized in that** it comprises:

- a shaft for receiving (2) a coil of ribbon (R) in the amorphous state,
- a temperature-regulated tunnel furnace (3),
- at least one S-type unit (4) situated before the inlet for the ribbon (R) into the furnace (3) and connected to a brake motor (5),
- a device (6) for adjusting a tensile stress in the axial direction of said amorphous ribbon (R) and of the strip (N) made of nanocrystalline material, said device (6) comprising a force-measuring device connected to a module for controlling the brake motor (5) of said S-type unit (4) situated before the inlet for the ribbon (R) into the furnace (3),
- at least one S-type unit (7) situated after the outlet for the strip (N) from the tunnel furnace (3) and connected to a motor,
- at least one winding spindle (8) for winding the strip (N) obtained after annealing in the form of a core made of nanocrystalline material,

the amorphous ribbon (R) passing from a storage coil for the amorphous ribbon (R) fitted onto said receiving shaft (2) to the coil for the strip (N) made of nanocrystalline material successively through the S-type unit (4) situated before the inlet for the ribbon (R) into the furnace (3), then through the force-measuring device (6), then through the furnace (3) and then through the S-type unit (7) situated after the outlet for the strip (N) from the furnace (3).

22. Device (1) according to Claim 21, comprising a first winding spindle for the strip and a second winding spindle for the strip, so that it is possible, after winding a first core on the first spindle, to cut the strip (N) and to fit a head part of the strip (N) onto the second spindle, in order to carry out the winding of a second core, without interrupting the manufacturing process.

23. Device (1) according to Claim 21, comprising a single winding spindle (8) for the strip (N) and a strip storage device (9) downstream of said outlet S-type unit (7) of the furnace (3), making it possible to change the winding coil without interrupting the manufacturing process.

24. Device (1) according to any one of Claims 21 to 23, additionally comprising at least one pressure roller (10) which will compress the annealed strip (N) as it passes through the S-type unit (7) situated after the outlet for the strip (N) from the tunnel furnace (3).

25. Device (1) according to any one of Claims 21 to 24, additionally comprising at least one cambered roller which will compress the amorphous ribbon (R) as it passes through the S-type unit (4) situated before the inlet for said ribbon (R) into the furnace (3).

**Patentansprüche**

1. Verfahren zum Herstellen eines Streifens aus nanokristallinem Material, der ausgehend von einem gegossenen Band in einem amorphen Zustand mit der folgenden atomaren Zusammensetzung gewonnen wird:

$$[Fe_{1-a-b}CO_aNi_b]_{100-x-y-z-\alpha-\beta-\gamma}Cu_xSi_yB_zNb_\alpha M'_\beta M''_\gamma$$

wobei M' mindestens eines der Elemente V, Cr, Al und Zn ist,
wobei M'' mindestens eines der Elemente C, Ge, P, Ga, Sb, In und Be ist, mit:

$$a \leq 0,07 \text{ und} \quad b \leq 0,1,$$
$$0,5 \leq x \leq 1,5 \quad \text{und} \quad 2 \leq \alpha \leq 5,$$
$$10 \leq y \leq 16,9 \quad \text{und} \quad 5 \leq z \leq 8,$$
$$\beta \leq 2 \text{ und} \quad \gamma \leq 2,$$

und indem das amorphe Band einem Rekristallisationsglühen unterworfen wird, bei welchem das Band dem Glühen im ausgerollten Zustand unterworfen wird, mit Durchlauf durch mindestens zwei S-Rollenblöcke und unter Spannung in einer im Wesentlichen longitudinalen, axialen Richtung des Bandes, derart, dass das Band während einer Dauer von 5 bis 120 Sekunden unter einer axialen Zugspannung von 2 bis 1000 MPa bei einer Glühtemperatur von 530 °C bis 700 °C gehalten wird, wobei die Zugspannung, der das amorphe Band ausgesetzt ist, seine Durchlaufgeschwindigkeit während des Glühens, die Glühzeit und die Glühtemperatur derart gewählt werden, dass das Querschnittsprofil des Streifens nicht $\Omega$-förmig ist und eine maximale Durchbiegung des Querschnitts des Streifens aufweist, die kleiner als 3 % der Breite des Streifens und vorzugsweise kleiner als 1 % der Breite ist.

**2.** Verfahren nach Anspruch 1, wobei die Durchlaufgeschwindigkeit des Streifens größer oder gleich 10 cm pro Sekunde und pro Meter des Nutzbereiches des Ofens ist.

**3.** Verfahren nach einem der Ansprüche 1 oder 2, wobei die axiale Zugspannung größer als 500 MPa ist.

**4.** Verfahren nach einem der Ansprüche 1 bis 3, wobei die Bruchhäufigkeit des amorphen Bandes beim Durchlaufen kleiner als 10 Brüche pro Kilometer Band ist.

**5.** Verfahren nach einem der Ansprüche 1 bis 4, wobei außerdem y größer oder gleich 12 ist.

**6.** Verfahren nach einem der Ansprüche 1 bis 5, wobei:

$$a \leq 0,04 \quad \text{und} \quad b \leq 0,07,$$
$$0,5 \leq x \leq 1,5 \quad \text{und} \quad 2 \leq \alpha \leq 5,$$
$$13 \leq y \leq 16,6 \quad \text{und} \quad 5,8 \leq z \leq 8,$$
$$\beta \leq 2 \text{ und} \quad \gamma \leq 2.$$

**7.** Verfahren nach Anspruch 6, wobei:

$$a \leq 0,02 \quad \text{und} \quad b \leq 0,05,$$
$$0,5 \leq x \leq 1,5 \quad \text{und} \quad 2,5 \leq \alpha \leq 4,$$
$$14,5 \leq y \leq 16,5 \quad \text{und} \quad 5,8 \leq z \leq 7,5,$$
$$\beta \leq 1 \text{ und} \quad \gamma \leq 1.$$

**8.** Verfahren nach einem der Ansprüche 1 bis 6, wobei:

$$a + b \leq 0,1.$$

**9.** Verfahren nach einem der Ansprüche 1 bis 8, wobei:

$$a = 0.$$

**10.** Verfahren nach einem der Ansprüche 1 bis 9, wobei:

$$b = 0.$$

**11.** Streifen aus nanokristallinem Material, der durch Anwendung des Verfahrens nach einem der Ansprüche 1 bis 10 hergestellt werden kann und geeignet ist, an jeder Stelle dieses Streifens einer Biegung mit einem Krümmungsdurchmesser von höchstens 3 mm unterzogen zu werden, ohne einen Bruch oder einen Riss aufzuweisen.

**12.** Streifen nach Anspruch 11, der durch Anwendung des Verfahrens nach einem der Ansprüche 1 bis 10, ausgehend von einem amorphen Band hergestellt wird, wobei die Dicke des Streifens im Vergleich zur Dicke des amorphen Bandes um mindestens 10 % verringert ist.

**13.** Streifen nach einem der Ansprüche 11 oder 12, dessen Koerzitivfeldstärke kleiner oder gleich 7 A/m und vorzugsweise kleiner oder gleich 5 A/m ist.

**14.** Streifen nach einem der Ansprüche 11 bis 13, dessen magnetische Induktion bei 15,92 kA/m(200 Oe) größer oder gleich 1,2 T (12 kG) ist.

**15.** Kern aus nanokristallinem Material, der durch Anwendung des Verfahrens nach einem der Ansprüche 1 bis 10, wonach der nanokristalline Streifen gewickelt wird, hergestellt werden kann, und dessen Permeabilität größer oder gleich 50 und kleiner als 200 ist, und dessen Grenzfrequenz zwischen 30 und 200 MHz liegt.

**16.** Kern aus nanokristallinem Material, der durch Anwendung des Verfahrens nach einem der Ansprüche 1 bis 10, wonach der nanokristalline Streifen gewickelt wird, hergestellt werden kann, und dessen Durchmesser kleiner oder gleich 10 mm ist.

**17.** Kern nach einem der Ansprüche 15 oder 16, der eine Verringerung der Volumenzunahme um höchstens 3 % im Vergleich zu der Volumenzunahme aufweist, die durch Wickeln eines Streifens mit derselben Zusammensetzung erhalten wird, der einem spannungsfreien Kristallisationsglühen unterzogen wurde, und zwar für eine Dickenabnahme des nanokristallisierten Streifens, die bis zu 10 % im Vergleich zur Dicke des zu Beginn vorliegenden amorphen Bandes beträgt.

**18.** Kern nach einem der Ansprüche 15 bis 17, der durch Anwendung des Verfahrens nach einem der Ansprüche 1 bis 10, wonach der nanokristalline Streifen ein erstes Mal auf einen ersten Dorn gewickelt wird, und danach durch Abwickeln und späteres Wickeln auf einen zweiten Dorn hergestellt wird, wobei der Durchmesser des zweiten Dorns kleiner als der Durchmesser des ersten Dorns ist.

**19.** Stromsensor, der geeignet ist, einen eine große Gleichstromkomponente aufweisenden Strom zu messen, und in einem einstufigen oder zweistufigen Leistungszähler verwendet werden kann, und der mindestens einen Kern aus nanokristallinem Material aufweist, der nach dem Verfahren nach einem der Ansprüche 6 bis 10 hergestellt wurde.

**20.** Speicher- oder Filterdrossel, die von der Größe der überlagerten Gleichstromkomponente unabhängig ist und in einem Leistungszähler verwendet werden kann, und die mindestens einen Kern aus nanokristallinem Material aufweist, der nach dem Verfahren nach einem der Ansprüche 6 bis 10 hergestellt wurde.

**21.** Einrichtung (1) zum Herstellen eines Magnetkerns ausgehend von einem Band (R), das in einem amorphen Zustand gegossen wird, durch Glühen des amorphen Bandes (R), **dadurch gekennzeichnet, dass** sie Folgendes aufweist:

- eine Welle (2) zur Aufnahme einer Spule des Bandes (R) im amorphen Zustand,
- einen temperaturgeregelten Durchlaufofen (3),
- mindestens einen S-förmigen Block (4), der sich vor dem Eintritt des Bandes (R) in den Ofen (3) befindet und mit einem Bremsmotor (5) verbunden ist,
- eine Einrichtung (6) zur Regelung einer Zugspannung des amorphen Bandes (R) und des Streifens (N) aus nanokristallinem Material in der axialen Richtung, wobei die Einrichtung (6) eine Kraftmesseinrichtung aufweist, die mit einem Steuermodul des Bremsmotors (5) des S-Rollenblockes (4), der sich vor dem Eintritt des Bandes (R) in den Ofen (3) befindet, verbunden ist,
- mindestens einen S-Rollenblock (7), der sich hinter dem Austritt des Streifens (N) aus dem Durchlaufofen (3) befindet und mit einem Motor verbunden ist,

- mindestens einen Wickeldorn (8) zum Aufwickeln des Streifens (N), der nach dem Glühen gewonnen wurde, in der Form eines Kerns aus nanokristallinem Material,

wobei das amorphe Band (R) von einer Spule zur Speicherung des amorphen Bandes (R), die auf der Aufnahmewelle (2) sitzt, zu der Spule mit dem Streifen (N) aus nanokristallinem Material läuft, und zwar nacheinander durch den S-Rollenblock (4), der sich vor dem Eintritt des Bandes (R) in den Ofen (3) befindet, danach durch die Kraftmesseinrichtung (6), danach durch den Ofen (3), danach durch den S-Rollenblock (7), der sich hinter dem Austritt des Streifens (N) aus dem Ofen (3) befindet.

22. Einrichtung (1) nach Anspruch 21, die einen ersten Dorn zum Aufwickeln des Streifens und einen zweiten Dorn zum Aufwickeln des Streifens aufweist, derart, dass es nach dem Wickeln eines ersten Kerns auf dem ersten Dorn möglich ist, den Streifen (N) abzuschneiden und einen Teil des vorderen Endes des Streifens (N) an dem zweiten Dorn in Eingriff zu bringen, um das Wickeln eines zweiten Kerns durchzuführen, ohne die Produktion zu unterbrechen.

23. Einrichtung (1) nach Anspruch 21, die einen einzigen Dorn (8) zum Wickeln des Streifens (N) und einen Streifenspeicher (9) stromabwärts des S-Rollenblockes (7) am Austritt aus dem Ofen (3) aufweist, der es ermöglicht, die Wickelspule zu wechseln, ohne die Produktion zu unterbrechen.

24. Einrichtung (1) nach einem der Ansprüche 21 bis 23, die außerdem mindestens eine Andruckrolle (10) aufweist, welche den geglühten Streifen (N) bei seinem Durchlauf durch den S-Rollenblock (7), der sich hinter dem Austritt des Streifens (N) aus dem Durchlaufofen (3) befindet, zusammendrückt.

25. Einrichtung (1) nach einem der Ansprüche 21 bis 24, die außerdem mindestens eine ballige Rolle aufweist, welche das amorphe Band (R) bei seinem Durchlauf durch den S-Rollenblock (4), der sich vor dem Eintritt des Bandes (R) in den Ofen (3) befindet, zusammendrückt.

EP 1 886 326 B1

## FIG. 1

## FIG. 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2823507